Europäisches Patentamt

European Patent Office

Office européen des brevets

(19)

(11) Veröffentlichungsnummer: **0 165 373**
B1

(12) **EUROPÄISCHE PATENTSCHRIFT**

(45) Veröffentlichungstag der Patentschrift: **23.05.90**

(51) Int. Cl.⁵: **H 04 N 7/12**

(21) Anmeldenummer: **85100541.3**

(22) Anmeldetag: **19.01.85**

(54) **Verfahren zur Fernsehschmalbandübertragung.**

(30) Priorität: **19.05.84 DE 3418794**

(43) Veröffentlichungstag der Anmeldung:
**27.12.85 Patentblatt 85/52**

(45) Bekanntmachung des Hinweises auf die
Patenterteilung:
**23.05.90 Patentblatt 90/21**

(84) Benannte Vertragsstaaten:
**AT BE CH DE FR LI**

(56) Entgegenhaltungen:
**DE-A-2 444 069     DE-B-2 518 328**
**DE-B-1 026 352     US-A-4 402 009**
**DE-B-2 041 798**

**"Handbuch für Hochfrequenz- und**
**Elektrotechniker", Band 3, 12. Auflage, S. 643-**
**644, Verlag Hüthig und Pflaum,**
**München/Heidelberg**
**Wiss. Ber. AEG-Telefunken 45 (1972) 1/2, S.**
**36-47;**

(73) Patentinhaber: **GRUNDIG E.M.V. Elektro-**
**Mechanische Versuchsanstalt Max Grundig**
**holländ. Stiftung & Co. KG.**
**Kurgartenstrasse 37**
**D-8510 Fürth/Bay. (DE)**

(72) Erfinder: **Rumland, Rainer, Dipl.-Ing.**
**Irmgardstrasse 12**
**D-8501 Rosstal (DE)**

(74) Vertreter: **Kolb, Max**
**Kurgartenstrasse 37**
**D-8510 Fuerth/Bayern (DE)**

Courier Press, Leamington Spa, England.

**Beschreibung**

Die Erfindung betrifft ein Verfahren mit den im Oberbegriff des Anspruchs 1 angegebenen Merkmalen.

Nach dem europäischen Standard wird die Übertragung von Videosignalen mit einer Bandbreite von 5 MHz durchgeführt. Das Ergebnis sind gut durchgezeichnete Bilder mit guter Auflösung. Die Praxis zeigt jedoch, daß man mit wesentlich geringerer Bandbreite noch ausreichend gute Bilder übertragen kann. Das beweisen die Heimvideorecorder und Einröhrenfarbkameras, die in der Regel mit einer Bandbreite von 2.5 MHz im Luminanzsignal arbeiten. Ferner sind Übertragungsversuche mit 2 MHz Bandbreite bekannt, die noch zufriedenstellende Ergebnisse liefern. Eine darüber hinausgehende Einschränkung der Bandbreite wird in der Regel nicht toleriert, da dann die übertragenen Bilder dem Betrachter zu unscharf erscheinen. Soll eine Übertragung mit Bandbreiten kleiner als 2 MHz erfolgen, so werden verschiedene Verfahren zur Datenreduktion und Zeittransformation verwendet, die jedoch nur mit aufwendiger Digitaltechnik realisierbar sind.

Aus der DE—A—25 18 328 ist ein Verfahren zur Konturkorrektur des Leuchtdichtesignals in einer Fernsehkamera bekannt, bei dem zu einem relativ unscharfen Leuchtdichtesignal ein horizontales Kontursignal zur Erhöhung der vertikalen Auflösung und ein vertikales Kontursignal zur Erhöhung der horizontalen Auflösung addiert werden. Bei diesem bekannten Verfahren erfolgt also sowohl die Horizontal- als auch die Vertikalkonturkorrektur senderseitig. Das führt dazu, daß die durch die Vertikalkonturkorrektur erzielten Vorteile in einem ggfs. an die Kamera angeschlossenen schmalbandigen Übertragungskanal wieder verloren gehen.

Aus dem vom Verlag Hüthig und Pflaum im Jahr 1979 herausgegebenen "Handbuch für Hochfrequenz- und Elektro-Techniker", S. 643 u. 644, sind Beispiele für Horizontalaperturkorrektur- und Vertikalaperturkorrekturschaltungen beschrieben.

Aus den "Wiss. Ber. AEG-Telefunken 45 (1972) 1/2", S. 36—47, sind Verfahren zur Verbesserung der Bildqualität bei einem über einen schmalbandigen Übertragungskanal übertragenen Fernsehsignal bekannt. Die bekannten Verfahren beruhen sämtlich auf empfängerseitigen Maßnahmen, die eine Flankenversteilerung der Helligkeitssprünge des Signals bewirken. Im einzelnen werden zwei verschiedene Wege aufgezeigt, nämlich eine Versteilerung durch Hinzufügen eines Korrektursignals zum Fernsehsignal und eine Versteilerung durch Umschalten zwischen unterschiedlich verzögerten Fernsehsignalen. Bei der Versteilerung durch Hinzufügen eines Korrektursignals kann das Korrektursignal unter Verwendung der 1. Ableitung des Fernsehsignals oder unter Verwendung der 2. Ableitung oder durch eine lineare Kombination mehrerer zeitlicher Ableitungen gebildet werden. Weitere Verbesserungen werden durch die Verwendung eines Quadrierers erzielt. Ferner ist in der Entgegenhaltung angegeben, daß mittels der dort beschriebenen Verfahren noch bei Übertragungskanälen mit einer Bandbreite von 2 MHz zufriedenstellende Ergebnisse erreicht werden.

Ausgehend vom letztgenannten Stand der Technik liegt der Erfindung die Aufgabe zugrunde, ein Verfahren mit dem im Oberbegriff des Anspruchs 1 angegebenen Merkmalen derart weiterzubilden, daß selbst bei einer weiteren Einsparung von Bandbreite des Übertragungskanals noch zufriedenstellende Bilder auf der Wiedergabeseite erhalten werden können.

Diese Aufgabe wird durch die im kennzeichnenden Teil des Anspruchs 1 angegebenen Merkmale gelöst. Vorteilhafte Weiterbildungen ergeben sich aus den Unteransprüchen.

Die Vorteile der Erfindung liegen insbesondere darin, daß die Verstärkerfeldlängen der Übertragungsstrecken bei geringem technischen Aufwand vergrößert werden können.

Zum besseren Verständnis der Erfindung wird zunächst erläutert, welche Parameter entscheidend zum Erhalt eines guten Bildes beitragen, und zwar unter Berücksichtigung der Eigenschaften des menschlichen Auges.

In der Regel wird die Auflösung eines Bildes als wichtigstes Kriterium für ein gutes Bild gewertet. Ebenso wesentlich ist aber die Kontrastübertragungsfunktion, die dafür verantwortlich ist, ob das menschliche Auge harte, steile Übergänge zwischen Hell und Dunkel vorfindet, die für ein scharfes Bild charakteristisch sind, oder nicht.

Aus der Schaltungstechnik der Horizontal- und der Vertikalapertur ist es grundsätzlich bekannt, den Effekt der Flankenversteilerung sogar noch überzubetonen, indem man im Apertursignal gezielt Überschwinger erzeugt, d.h. die Signalflanke zwischen Dunkel und Hell nicht nur versteilert, sondern sogar das Signal mit einem Überschwinger von Dunkel gegen Schwarz gehen, dann steil ansteigen, gegen Weiß überschwingen und schließlich den vorgegebenen Wert Hell erreichen läßt. Das menschliche Auge wird also quasi überlistet, wenn ihm durch Vergrößerung des Kontrastsprungs Schärfe simuliert wird.

Nimmt man die beiden Kriterien Auflösung und Kontrastübertragungsfunktion und bezieht sie auf Bildinhalte, so bestätigt sich die Annahme, daß eine gute Auflösung des Bildes nicht immer ausschlaggebend ist. Ein Beispiel soll die Zusammenhänge veranschaulichen: Um frühzeitig die Staubildung im Verkehrsfluß in Städten oder auf kritischen Autobahnabschnitten zu erkennen, werden Fernsehkameras verwendet, deren Bilder man in einer Zentrale auswertet. Bei dieser Aufgabe ist es völlig ausreichend zu sehen, ob die Fahrzeuge stehen oder fahren und wie schnell sie fahren. Es ist nicht erforderlich, das Kennzeichen eines jeden Fahrzeuges lesen zu können. Dagegen kann es interessant sein zu erkennen, ob es sich um PKW's oder LKW's handelt. An diesem Beispiel sieht man, daß die absolute Auflösung von untergeordneter Bedeutung ist.

Führt man nun eine Begrenzung der standardmäßigen Übertragungsbandbreite von 5 MHz etwa um den Faktor 7 auf 700 kHz ein, so wird das Bild nur unscharf auf dem Monitor wiedergegeben, was beim Wartungspersonal sehr schnell zu Ermüdungserscheinungen bis hin zur völligen Ignorierung des Bildes führt.

Dies wird durch eine künstliche Versteilerung der "weichen" Übergänge vermieden, die dem menschlichen Auge Schärfe simuliert. In der Praxis zeigt sich, daß ein derart aufbereitetes Bild akzeptiert wird und seine Aufgabe voll erfüllt.

Ein wesentlicher Vorteil dieser Bandbreitenreduzierung liegt in der damit verbundenen Vergrößerung der Verstärkerfeldlänge der Übertragungsstrecke. Eine standardmäßige Zweidrahtübertragungsstrecke mit Leitungen von 2×0.8 mm Durchmesser und einer Übertragungsbandbreite von 5 MHz ermöglicht eine Verstärkerfeldlänge von 2.5 km. Durch die Bandbreitenreduzierung von 5 MHz etwa um den Faktor 7 auf 700 kHz ist eine Vergrößerung der Verstärkerfeldlänge um den Faktor $\sqrt{7} \approx 2.65$ möglich. Damit sind weniger Zwischenverstärker nötig und der Umfang der nötigen baulichen Maßnahmen wird geringer. Dies ist von erheblicher wirtschaftlicher Bedeutung.

Ein weiterer Vorteil der vorliegenden Erfindung besteht darin, daß das System an die jeweils vor Ort herrschenden Verhältnisse angepaßt werden kann. Wird die zur Verfügung stehende Verstärkerfeldlänge nicht voll ausgenutzt, so kann die nicht genutzte Leitungslänge unmittelbar in nutzbare Bandbreite umgesetzt werden. Wird z.B. die maximal mögliche Verlängerung der Verstärkerfeldlänge von Faktor 2.65 nur mit Faktor 2.25 genutzt, so ergibt sich eine nutzbare Bandbreite von 1 MHz gegenüber 700 kHz. Damit steigt die Bildqualität.

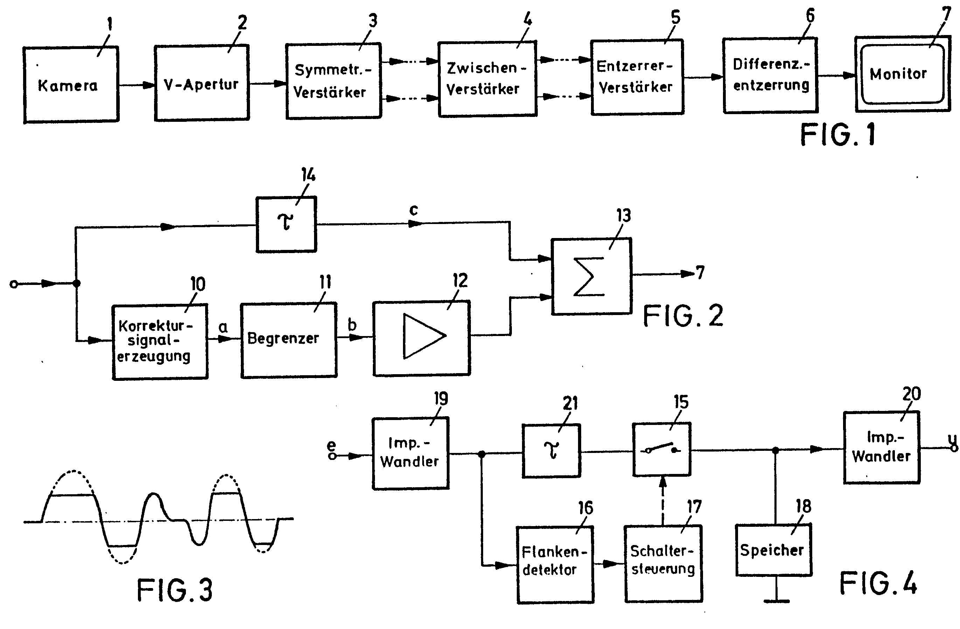

Im folgenden wird mit Hilfe der Figuren 1 bis 4 das Verfahren nach der vorliegenden Erfindung beispielhaft erläutert.

Die Figur 1 zeigt ein Blockschaltbild der Gesamtanlage. Die Kamera 1 liefert ein standardmäßiges Videosignal mit einer Bandbreite von z.B. 5 MHz. Das Signal wird zunächst einer Einrichtung 2 zur Zweizeilen-Vertikalapertur zugeführt, wie sie bereits aus hochwertigen Farbfernsehkameras grundsätzlich bekannt ist. Dort muß das Signal.u.a. breitbandig um zwei Zeilen verzögert werden. Zu einer derartigen Verzögerung verwendet man üblicherweise in hochwertigen Farbfernsehkameras Glasverzögerungsleitungen mit hoher Bandbreite (z.B. 7 MHz) oder CCD-Verzögerungsleitungen mit hoher Pixelzahl, während bei der Einrichtung nach der vorliegenden Erfindung aufgrund der geringen zu übertragenden Bandbreite von 700 kHz eine Verzögerungsleitung geringerer Bandbreite verwendet werden kann, z.B. eine Glasleitung, wie sie aus PAL-Farbfernsehempfängern bekannt ist. Dies führt zu einer besonders preiswerten Anordnung. In der Einrichtung 2 wird eine Vertikaldetailinformation durch Vergleich von unverzögertem, um die Dauer einer Zeile verzögertem und um die Dauer von zwei Zeilen verzögertem Signal gewonnen und mit dem verzögerten Eingangssignal zur Flankenversteilerung des Eingangssignals kombiniert.

Diese Vertikalaperturkorrektur wird vorzugsweise vor der schmalbandigen Übertragungsstrecke durchgeführt, also senderseitig, denn auf der Senderseite weist das zu übertragende Signal den größten Störabstand auf. Damit tritt der dem Videosignal überlagerte Störsignalanteil am wenigsten in Erscheinung.

Würde man die Vertikalaperturkorrektur auf der Empfangsseite vornehmen, so würde der auf der Übertragungsstrecke hinzukommende Störanteil die Vertikalaperturkorrektur negativ beeinflussen, was eine subjektiv empfundene Verschlechterung des Bildes zur Folge hätte.

Ferner kann in der Praxis der Fall vorliegen, daß an einen Sender über verschiedene Leitungen mehrere Empfänger angeschlossen sind. Würde man die Vertikalaperturkorrektur empfangsseitig durchführen, dann wären bei N angeschlossenen Empfängern N Einrichtungen zur Vertikalaperturkorrektur nötig, was einen erheblichen Kostenaufwand bedeuten würde. Die senderseitige Anordnung der Einrichtung zur Vertikalaperturkorrektur ist aber nur möglich, weil bei der Vertikalaperturkorrektur hohe Frequenzen nahezu keine Rolle spielen. Damit gehen die durch die senderseitige Vertikalaperturkorrektur erreichten Vorteile auf der schmalbandigen Übertragungsstrecke, die Tiefpaß-Charakter hat, nicht verloren.

Der Symmetrieverstärker 3, der Zwischenverstärker 4, der bei großen Leitungslängen nötig ist, und der Entzerrerverstärker 5 bilden die standardmäßigen Baugruppen bei einer Signalübertragung. Sie müssen bei der vorliegenden Anordnung nur von ihrer Übertragungsbandbreite her an die Bandbreite von 700 kHz angepaßt werden.

Die auf der Empfangsseite angeordnete Einrichtung 6 zur Differenzierentzerrung arbeitet grundsätzlich ebenso wie die Einrichtung 2 zur Vertikalaperturkorrektur mit der Ausnahme, daß ein Vergleich benachbarter Bildelemente stattfindet, und das daraus erhaltene Korrektursignal mit dem verzögerten Eingangssignal kombiniert wird. Die Einrichtung zur Differenzierentzerrung wird empfangsseitig angeordnet, da bei einer senderseitigen Differenzierentzerrung die Tiefpaß-Wirkung der Schmalbandübertragungsstrecke den durch die Differenzierentzerrung erreichten Vorteil der Flankenversteilerung wieder zunichte machen würde.

Die Figur 2 zeigt ein Ausführungsbeispiel für die Einrichtung 6 zur Differenzierentzerrung. In einer Schaltung 10 zur Erzeugung eines Korrektursignals wird durch die Verknüpfung von unverzögertem, einmal verzögertem und zweimal verzögertem Signal das Korrektursignal a gewonnen. Bevor dieses Korrektursignal a dem im Verzögerungsglied 14 verzögerten Eingangssignal c zugesetzt wird, wird das Korrektursignal einem Begrenzer 11 zugeführt. Die Wirkung dieses Begrenzers wird mit Hilfe der Fig. 3 erläutert: Das vorzugsweise sinusförmig ansteigende und abfallende Korrektursignal a wird symmetrisch begrenzt. Das hat zur Folge, daß bei großen Korrektursignalen nur der relativ steile Anstieg der sinusförmigen Kurve bis zum Einsatz des Begrenzers genutzt wird. Dieses begrenzte Signal b wird einem Verstärker 12 zugeführt und darin auf die zum Zusammenmischen mit dem verzögerten Eingangssignal c erforderliche Amplitude gebracht. In der Addierstufe 13 addiert man schließlich das begrenzte, versteilerte Korrektursignal zum verzögerten Eingangssignal.

Das Ausgangssignal der Addierstufe 13 kann dann dem Monitor 7 (in Fig. 1) zugeführt werden, so daß das Wartungspersonal auf dem Monitor ein künstlich versteilertes Signal, also ein scharfes Bild sieht.

Eine weitere Möglichkeit, die gewünschte Flankenversteilerung zu erzielen oder aber die erreichte Flankensteilheit zu verbessern, wird im folgenden mit Hilfe der Fig. 4 beispielhaft erläutert. Das zu versteilernde Signal liegt am Eingang e der Einrichtung zur Flankenversteilerung an und wird über einen ersten Impedanzwandler 19, ein Verzögerungsglied 21, einen Schalter 15 und einen zweiten Impedanzwandler 20 dem Ausgang u der Einrichtung zur Flankenversteilerung zugeführt. An den Ausgang des Impedanzwandlers 19 ist ferner ein Flankendetektor 16 angeschlossen, der Flanken im auftretenden Signal erkennt und ein Schaltsignal an die Schaltersteuerung 17 abgibt. Diese wiederum öffnet beim Auftreten einer Flanke den Schalter 15 und unterbricht damit für die Dauer der Flanke den Signalweg zwischen dem Verzögerungsglied 21 und dem Impedanzwandler 20. Der unmittelbar vor dem Öffnen des Schalters 15 am Eingang des Impedanzwandlers 20 anliegende Signalwert wird in einem Speicher 18 gespeichert und dient während der Übertragung seines Schalters 15 als Eingangssignal für den Impedanzwandler 20. Am Ausgang des Impedanzwandlers 20 und damit auch am Ausgang der Einrichtung zur Flankenversteilerung liegt das gleiche Signal an, wie es kurz vor dem Öffnen des Schalters anlag. Voraussetzung dafür ist lediglich, daß sich während der kurzen Öffnungszeit des Schalters 15 die vom Speicher gelieferte und am Eingang des Impedanzwandlers 20 anliegende Spannung nicht ändert. Dies kann durch eine geschickte Schaltungsbemessung erreicht werden.

Die in Fig. 4 beschriebene Einrichtung zur Flankenversteilerung kann beispielsweise die Einrichtung 6 zur Differenzierentzerrung ersetzen oder auch als Zusatzmaßnahme innerhalb der Einrichtung 6 zur Differenzierentzerrung verwendet werden.

## Patentansprüche

1. Verfahren zur Fernsehschmalbandübertragung, bei dem das Fernsehsignal
   in einer standardmäßigen Signalquelle erzeugt,
   über einen schmalbandigen Übertragungskanal übertragen,

auf der Empfangsseite Maßnahmen zur Erhöhung des Schärfeeindrucks an senkrechten Kanten unterworfen
und auf einem Fernsehmonitor dargestellt wird,
dadurch gekennzeichnet, daß auf der Senderseite Maßnahmen zur Erhöhung des Schärfeeindrucks an waagrechten Kanten durchgeführt werden, um dadurch Bandbreite des Übertragungskanals einzusparen.

2. Verfahren nach Anspruch 1, dadurch gekennzeichnet, daß auf der Senderseite zur Flankenversteilerung des Signals eine Vertikalaperturkorrektur durchgeführt wird.

3. Verfahren nach Anspruch 1 oder 2, dadurch gekennzeichnet, daß auf der Empfangsseite zur Flankenversteilerung des Signals eine Differenzierentzerrung durchgeführt wird.

4. Verfahren nach Anspruch 3, dadurch gekennzeichnet, daß das aus dem übertragenen Signal gewonnene Korrektursignal durch einen Begrenzer (11) in der Amplitude beschnitten wird, bevor es dem übertragenen Signal zugesetzt wird.

5. Verfahren nach einem oder mehreren der vorhergehenden Ansprüche, dadurch gekennzeichnet, daß auf der Empfangsseite zur Flankenversteilerung des Signals die auftretenden Flanken detektiert, während des Auftretens von Flanken der Signalweg durch Öffnen eines im Signalweg liegenden Schalters (15) unterbrochen und der Wert des Signals vor dem Beginn der Flanke, der vor dem Öffnen des Schalters (15) in einem Speicher (18) abgelegt wurde, weitergegeben wird, und nach Beendigung der Flanke der Schalter (15) wieder geschlossen wird, so daß der Signalwert nach dem Ende der Flanke weitergegeben wird.

## Revendications

1. Procédé de transmission à bande étroite pour la télévision, dans lequel le signal de télévision
   est produit dans une source de signaux standard,
   est transmis par un canal de transmission à bande étroite,
   est soumis, côté réception, à des mesures destinées à accroître l'impression de netteté sur les bords verticaux,
   et est représenté sur un moniteur de télévision,
   caractérisé en ce que du côté réception, on adopte des mesures propres à accroître l'impression de netteté sur les bords horizontaux, afin d'économiser ainsi de la largeur de bande du canal de transmission.

2. Procédé selon la revendication 1, caractérisé en ce que du côté de l'émission, on procède à une correction de l'ouverture verticale pour augmenter la pente des flancs du signal.

3. Procédé selon la revendication 1 ou 2, caractérisé en ce que du côté de la réception, on procède à une correction de différenciation pour augmenter la pente des flancs du signal.

EP 0 165 373 B1

4. Procédé selon la revendication 3, caractérisé en ce qu'un limiteur (11) réduit l'amplitude du signal de correction obtenu à partir du signal transmis, avant qu'il ne soit ajouté au signal transmis.

5. Procédé selon une ou plusieurs des revendications ci-dessus, caractérisé en ce que du côté de la réception et pour augmenter la pente des flancs du signal, on détecte les flancs se produisant, on interrompt le parcours du signal, pendant l'apparition des flancs, par ouverture d'un interrupteur (15) se situant dans le parcours du signal, et on transmet la valeur du signal avant le début des flancs, valeur qui avait été stockée dans une mémoire (18) avant l'ouverture de l'interrupteur (15), et on ferme à nouveau l'interrupteur (15) après l'achèvement des flancs, de sorte que l'on transmet la valeur du signal après la fin des flancs.

**Claims**

1. Method for narrow-band television transmission, in which the television signal

is generated in a standard signal source, transmitted via a narrow-band transmission channel,

subjected to measures for enhancing the impression of sharpness at vertical edges at the receiving end

and displayed on a television monitor,

characterized in that measures for enhancing the impression of sharpness are carried out at horizontal edges at the transmitting end in order to save bandwidth of the transmission channel by this means.

2. Method according to Claim 1, characterized in that a vertical aperture correction is carried out at the transmitting end for steepening the edges of the signal.

3. Method according to Claim 1 or 2, characterized in that a differentiating equalization is carried out at the receiving end for steepening the edges of the signal.

4. Method according to Claim 3, characterized in that the correction signal obtained from the transmitted signal is amplitude limited by a limiter (11) before it is added to the transmitted signal.

5. Method according to one or more of the preceding claims, characterized in that at the receiving end, in order to steepen the edges of the signal, the occurring edges are detected, during the occurrence of edges the signal path is interrupted by opening a switch (15) located in the signal path and the value of the signal before the beginning of the edge, which was stored in a memory (18) before the opening of the switch (15), is forwarded and after termination of the edge the switch (15) is closed again so that the signal value following the end of the edge is forwarded.

FIG.1

FIG.2

FIG.3

FIG.4